# EUROPÄISCHE PATENTANMELDUNG

(11) **EP 2 174 548 A2**
(43) Veröffentlichungstag der Anmeldung: **14.04.2010**
(21) Anmeldenummer: 09012374.6
(22) Anmeldetag: 30.09.2009
(51) Int. Cl.: A21C 5/00

(54) **Vorrichtung und Verfahren zum Bearbeiten von Teiglingen**

(30) Priorität: 10.10.2008 DE 102008050956
(71) Anmelder: Fortuna Maschinenbau Holding AG, 96231 Bad Staffelstein (DE)
(72) Erfinder: Moritz, Alexander, 96250 Ebensfeld (DE)
(74) Vertreter: Schröer, Gernot H.

(57) **Zusammenfassung**

Um insbesondere portionierte Teiglinge besonders zuverlässig durch eine Vorrichtung zum Bearbeiten von Teiglingen transportieren zu können, schlägt die Erfindung eine Vorrichtung (1) zum Bearbeiten von Teiglingen (2) umfassend eine Einrichtung (3) zum Portionieren eines Teiglings (2) mit einer Ausgebeeinrichtung (12) zum Ausgeben eines portionierten Teiglings (2) und umfassend eine Einrichtung (4) zum Transportieren und/oder zum Weiterverarbeiten des aus der Ausgebeeinrichtung (12) ausgegebenen portionierten Teiglings (2) vor, wobei sich die vorliegende Vorrichtung (1) durch berührungslos arbeitende Mittel (14) zum Lösen des portionierten Teiglings (2) von einem Bauteil und/oder von einer Bauteilgruppe der Vorrichtung (1) auszeichnet.

## Beschreibung

Die Erfindung betrifft einerseits eine Vorrichtung zum Bearbeiten von Teiglingen umfassend eine Einrichtung zum Portionieren eines Teiglings mit einer Ausgebeeinrichtung zum Ausgeben eines portionierten Teiglings und umfassend eine Einrichtung zum Transportieren und/oder zum Weiterverarbeiten des aus der Ausgebeeinrichtung ausgegebenen portionierten Teiglings. Andererseits betrifft die Erfindung ein Verfahren zum Bearbeiten von Teiglingen, bei welchem jeweils ein Teigling von einer Teigmasse getrennt und hierbei portioniert werden kann, wobei der portionierte Teigling aus einer Teigteilkammer einer Portioniereinrichtung heraus zum Weiterverarbeiten bereitgestellt wird.

Gattungsgemäße Vorrichtungen und Verfahren sind aus dem Stand der Technik bekannt und mit ihnen lassen sich betriebssicher eine Vielzahl an Teiglingen aus einer Teigmasse heraustrennen und portionieren, bevor die Teiglinge anschließend, beispielsweise mittels einer Wirkvorrichtung, für eine Endbearbeitung in eine gewünschte Form gebracht werden können. Zum Beispiel können solche Vorrichtungen zur Teiglingsbearbeitung vorteilhaft in Kombination mit Wirkvorrichtungen, insbesondere vor Ort in Bäckereien, zum Einsatz kommen, um portionierte Teiglinge in etwa rund beziehungsweise oval zu formen. Typischerweise können mit derartigen Vorrichtungen 10.000 bis 20.000 Teiglinge pro Stunde portioniert und gegebenenfalls entsprechend geformt werden.

Beispielsweise ist aus der Offenlegungsschrift DE 103 06 437 A1 eine Teigbearbeitungsanlage bekannt, bei welcher eine Teigmasse durch einen Zuführtrichter einer Teigportioniereinrichtung zugeführt werden kann, wobei die Teigportioniereinrichtung den ihr zugeführten Teig in einzelne Teigstücke von gewünschter Größe und Masse portioniert. Hierzu verfügt die Teigportioniereinrichtung unter anderem über einen Portionierzylinder, der eine geeignete Portionierkammer ausbildet, aus welcher heraus die Teigstücke portioniert ausgegeben und zur weiteren Verwendung bereitgestellt werden können. So gelangen die einzelnen Teigstücke mittels eines mechanischen Schiebers aus der Portionierkammer heraus weiter auf ein Übergabetransportband und werden hiermit einer Teigwirkvorrichtung zugeführt. Mittels der Teigwirkvorrichtung können die einzelnen Teigstücke dann für eine Endbearbeitung in eine gewünschte Form gebracht werden.

Es ist Aufgabe vorliegender Erfindung, gattungsgemäße Vorrichtungen derart weiterzuentwickeln, dass insbesondere portionierte Teiglinge betriebssicherer transportiert werden können.

Die Aufgabe der Erfindung wird von einer Vorrichtung zum Bearbeiten von Teiglingen umfassend eine Einrichtung zum Portionieren eines Teiglings mit einer Ausgebeeinrichtung zum Ausgeben eines portionierten Teiglings und umfassend eine Einrichtung zum Transportieren und/oder zum Weiterverarbeiten des aus der Ausgebeeinrichtung ausgegebenen portionierten Teiglings gelöst, wobei sich die vorliegende Vorrichtung durch berührungslos arbeitende Mittel zum Lösen des portionierten Teiglings von einem Bauteil und/oder von einer Bauteilgruppe der Vorrichtung auszeichnet.

Insbesondere bei einem klebrigen Teig ist es besonders wichtig, dass daraus portionierte Teiglinge problemlos transportiert werden können. Speziell ein längeres Anhaften bzw. Kleben der portionierten Teiglinge an Bauteilen und/oder Bauteilgruppen, wie etwa an Wandungen einer raumbegrenzenden Teigteilkammer einer Teigteilwalze, kann die Handhabung bzw. den Transport der portionierten Teiglinge an einer Vorrichtung zum Bearbeiten von Teiglingen erschweren und sogar empfindlich stören, wenn Bauteile und/oder Bauteilgruppen dauerhaft mit Teig verkleben. Die Gefahr einer derartigen Störung kann jedoch erheblich reduziert werden, wenn die Bearbeitungsvorrichtung berührungslos arbeitende Mittel zum Lösen des portionierten Teiglings von einem Bauteil und/oder von einer Bauteilgruppe aufweist.

Als " portionierte Teiglinge" werden im Zusammenhang mit vorliegender Erfindung jegliche Teigstücke beschrieben, welche aus einer Teigmasse heraus im Wesentlichen vorportioniert werden, und welche anschließend zum Fertigstellen einer Backware noch in eine gewünschte Form gebracht werden können. Beispielsweise hinsichtlich Brötchen können solche Teiglingsformen rund, oval, aber auch quadratisch oder rechteckig sein. Hierbei können die portionierten Teiglinge nahezu eine beliebige Größe und/oder Masse haben.

Selbst bei nicht stark klebenden Teigen sind derartige berührungslos arbeitende Lösemittel vorteilhaft, da hierdurch ein Ablösen eines portionierten Teiglings erheblich beschleunigt werden kann, wodurch nicht nur die Betriebssicherheit sondern auch der Umsatz der vorliegenden Vorrichtung gegenüber herkömmlichen gattungsgemäßen Vorrichtungen verbessert werden kann.

Eine besonders bevorzugte Vorrichtungsvariante sieht somit auch berührungslos arbeitende Mittel zum Herauslösen des portionierten Teiglings aus der Ausgebeeinrichtung vor. Besonders vorteilhaft ist es, wenn die Vorrichtung berührungslos arbeitende Mittel zum Herauslösen des portionierten Teiglings aus der Ausgebeeinrichtung aufweist, da das Herauslösen des portionierten Teiglings aus einer derartigen Ausgebeeinrichtung, insbesondere auf Grund raumbegrenzender Wandungen, oftmals nur langsam und/oder nur unvollständig erfolgen kann. Jedenfalls können portionierte Teiglinge mittels der berührungslos arbeitenden Mittel zum Herauslösen aus der Ausgebeeinrichtung zuverlässiger etwa auf eine Transporteinrichtung und/oder in eine sonstige Weiterverarbeitungseinrichtung übergeben werden. Da speziell ein schwieriges Herauslösen eines Teiglings aus einer solchen raumbegrenzenden Ausgebeeinrichtung vorteilhaft mit den berührungslos arbeitenden Mitteln zum Herauslösen vorgenommen werden kann, sind die Merkmale im Zusammenhang mit den berührungslos arbeitenden Mitteln zum Herauslösen des portionierten Teiglings aus der Ausgebeeinrichtung auch ohne die übrigen Merkmale der Erfindung vorteilhaft.

Eine Weiterverarbeitung des portionierten Teiglings kann besonders vorteilhaft vorgenommen werden, wenn die Einrichtung zum Weiterverarbeiten des portionierten Teiglings eine Wirkeinrichtung zum Wirken des portionierten Teiglings umfasst. Mittels der Wirkeinrichtung können portionierte Teiglinge gut und schnell in eine gewünschte Form gebracht werden.

Es versteht sich, dass derartige Transporteinrichtungen und/oder Weiterverarbeitungseinrichtungen fest an der vorliegenden Vorrichtung montiert bzw. integriert sein können. Oder derartige Transporteinrichtungen und/oder Weiterverarbeitungseinrichtungen sind mobil und lösbar an der hier beschriebenen Vorrichtung bereitgestellt.

Besonders vorteilhaft sind die berührungslos arbeitenden Mittel an der vorliegenden Vorrichtung einsetzbar, wenn die Ausgebeeinrichtung eine Teigteilwelle mit einer Teigteilkammer aufweist. Insbesondere eine Teigteilwelle wird zum Portionieren und/oder zum Ausgeben eines Teiglings gedreht, so dass mechanisch arbeitende Ausgebeschieber zum Ausschieben des Teiglings aus der Teigteilkammer gar nicht oder nur mit einer sehr kompliziert bauenden Mechanik realisiert werden können. Insbesondere, wenn der portionierte Teigling jedoch lediglich auf Grund der Schwerkraft aus der Teigteilkammer heraus beschleunigt werden soll, können die vorliegenden berührungslos arbeitenden Mittel besonders vorteilhaft eingesetzt werden.

Die Aufgabe der Erfindung wird auch von einem Verfahren zum Bearbeiten von Teiglingen gelöst, bei welchem jeweils ein Teigling von einer Teigmasse getrennt und hierbei portioniert werden kann, wobei der portionierte Teigling aus einer Teigteilkammer einer Portioniereinrichtung heraus zum Weiterverarbeiten bereitgestellt wird, und wobei der portionierte Teigling berührungslos aus der Teigteilkammer herausgelöst wird.

Dadurch, dass der portionierte Teigling berührungslos speziell aus der Teigteilkammer herausgelöst werden kann, ist die Gefahr ausgeschlossen, dass der portionierte Teigling an den Mitteln zum Lösen bzw. zum Herauslösen anhaften kann. Somit ist die Zuverlässigkeit eines störungsfreien und schnellen Transports der portionierten Teiglinge wesentlich erhöht.

Eine vorteilhafte Ausführungsvariante sieht vor, dass die berührungslos arbeitenden Mittel eine Druckluftdüse umfassen. Insbesondere mittels Druckluftdüsen können die berührungslos arbeitenden Mittel baulich einfach gestaltet werden.

Deshalb ist es verfahrenstechnisch vorteilhaft, wenn der portionierte Teigling mittels Druckluftunterstützung aus der Teigteilkammer herausgelöst wird. Druckluft kann vorteilhafter Weise besonders kostengünstig bereitgestellt werden, insbesondere dann, wenn die Druckluft aus bereits vorhandene Druckluftleitungen entnommen werden kann.

Es ist hierbei möglich, die Druckluft direkt auf den portionierten Teigling zu leiten. Um die Gefahr zu verringern, dass der portionierte Teigling mittels der Druckluft kritisch deformiert wird, ist es vorteilhaft, wenn die Druckluft in die Teigteilkammer eingeblasen wird. Beispielsweise kann die Druckluft gegen eine Wandung der Teigteilkammer geleitet werden. Hierdurch wirkt sie im Wesentlichen nur mittelbar auf den portionierten Teigling ein, wodurch der portioniert Teigling besonders schonend aus der Teigteilkammer herausgelöst werden kann.

Kumulativ oder alternativ ist es vorteilhaft, wenn die berührungslos arbeitenden Mittel eine Flüssigkeitsdüse umfassen. Auch mittels einer Flüssigkeit kann ein ungewolltes kritisches Anhaften bzw. Kleben eines portionierten Teiglings kumulativ oder alternativ verhindert werden.

Während mittels der Druckluft der portionierte Teigling eher aktiv etwa von einer Wandung gelöst werden kann, kann der portionierte Teigling mittels eines aufgesprühten Öls eher passiv von einer Wandung gelöst werden. Somit können die Druckluftdüsen und eine diesbezügliche Druckluftauftragseinrichtung auch eher als aktiv berührungslos arbeitende Mittel zum Herauslösen des portionierten Teiglings und die Flüssigkeitsdüsen und eine diesbezügliche Flüssigkeitsauftragseinrichtung eher als passiv berührungslos arbeitende Mittel zum Herauslösen des portionierten Teiglings bezeichnet werden.

Jedoch speziell durch die Kombination aus Druckluftdüsen zum Aufdüsen einer Druckluft und aus Flüssigkeitsdüsen zum Aufsprühen vorzugsweise eines Öls kann ein außergewöhnlich zuverlässiger Transport eines portionierten Teiglings erzielt werden. Somit ist es vorteilhaft, wenn die Mittel zum Lösen bzw. die Mittel zum Herauslösen eines portionierten Teiglings sowohl Druckluftdüsen als auch Flüssigkeitsdüsen umfassen.

Insbesondere in diesem Zusammenhang sieht eine Verfahrensvariante vor, dass der portionierte Teigling vor, während und/oder nach einem Herauslösen aus der Teigteilkammer mit einer Flüssigkeit, vorzugsweise mit Öl, benetzt wird. Insbesondere hierdurch kann die Gefahr verringert werden, dass der so etwa mit Öl benetzte Teigling kritisch an Bauteilen und/oder an Bauteilgruppen insbesondere der vorliegenden Vorrichtung anhaften kann.

Des Weiteren ist es vorteilhaft, wenn die Teigteilkammer nach einem Herauslösen des portionierten Teiglings aus der Teigteilkammer zumindest teilweise mit einer Flüssigkeit, vorzugsweise mit Öl, benetzt wird. Hierdurch kann ebenfalls ein ungewolltes Anhaften bzw. Kleben des portionierten Teiglings an einer Wandung der Teigteilkammer einfach aber wirkungsvoll und zudem berührungslos verhindert werden.

Deshalb sieht eine weiter vorteilhafte Ausführungsvariante vor, dass die berührungslos arbeitenden Mittel eine Einrichtung zum Benetzen des portionierten Teiglings und/oder einer Wandung der Ausgebeeinrichtung mit Öl umfassen.

Da ein unerwünschtes Anhaften bzw. Kleben eines portionierten Teiglings allein schon mittels eines geeigneten Auftragens einer Flüssigkeit, insbesondere eines Öls, auf den portionierten Teigling und/oder auf eine Wandung, mit welcher der portionierte Teigling in Kontakt kommen kann, verhindert werden kann, sind die Merkmale hinsichtlich der Flüssigkeitsdüse bzw. der Einrichtung zum Benetzen einschließlich entsprechender Benetzungsverfahren auch unabhängig von den übrigen Merkmalen der Erfindung vorteilhaft.

Besonders wirkungsvoll kann ein kritisches Anhaften bzw. Kleben des portionierten Teigling verhindert werden, wenn abwechselnd Öl und Druckluft insbesondere auf den portionierten Teigling in der Teigteilkammer gedüst werden. Je nach Verfahrensführung können das Öl und die Druckluft auch auf eine Wandung der Teigteilkammer gedüst werden, um einen Hafteffekt hinsichtlich eines portionierten Teiglings entsprechend reduzieren zu können.

Es versteht sich, dass die berührungslos arbeitenden Mittel oder zumindest Komponenten hiervon innerhalb der Ausgebeeinrichtung, insbesondere innerhalb einer Teigteilkammer, platziert werden können. Eine baulich besonders einfach gestaltete Ausführungsvariante sieht jedoch vor, dass die berührungslos arbeitenden Mittel unterhalb der Ausgebeeinrichtung angeordnet sind. Hierdurch können die berührungslos arbeitenden Mittel vorteilhafter Weise außerhalb der Ausgebeeinrichtung angeordnet werden.

Sind die berührungslos arbeitenden Mittel zudem vor einer Ausgebeöffnung der Ausgebeeinrichtung angeordnet, kann problemlos Druckluft und/oder Öl in eine Teigteilkammer eingedüst werden, wobei auch ein in der Teigteilkammer befindlicher Teigling mit Druckluft bzw. Öl bedüst werden kann.

Öffnet sich die Ausgebeeinrichtung zum Ausgeben des portionierten Teiglings etwa nach unten, so dass der Teigling allein auf Grund der Schwerkraft aus der Ausgebeeinrichtung herausfallen kann, ist es vorteilhaft, wenn die berührungslos arbeitenden Mittel unterhalb und neben einer Ausgebeöffnung der Ausgebeeinrichtung angeordnet sind. Hierdurch können die berührungslos arbeitenden Mittel vorteilhafter Weise derart gegenüber der Ausgebeeinrichtung angeordnet werden, dass sie einen Transport des portionierten Teiglings nicht behindern.

In einer weiteren Ausführungsform umfasst die Einrichtung zum Transportieren und/oder zum Weiterverarbeiten des aus der Ausgebeeinrichtung ausgegebenen portionierten Teiglings eine Wirkvorrichtung zum Wirken des Teiglings in eine gewünschte Form und eine Übergabe- oder Transporteinrichtung zum Transportieren des Teiglings von den berührungslose arbeitenden Mitteln oder der Portioniereinrichtung oder deren Ausgebeeinrichtung zur Wirkvorrichtung. Besonders vorteilhaft ist es, besonders bei empfindlichen Teigen, wenn der Transport der Teiglinge von der Portioniereinrichtung zum Portionieren der Teiglinge zu der Wirkvorrichtung im Wesentlichen horizontal und/oder ohne eine Fallbewegung erfolgt, außer ggf. einer anfänglichen Fallbewegung von der Portioniereinrichtung auf das Transportband oder ein dem Transportband vorgeschaltetes Übergabeband. Insbesondere wird einem Transportband ein Übergabeband, vorgeschaltet, die die von einer Portioniereinrichtung kommenden Teiglinge im Wesentlichen horizontal und/oder ohne eine Fallbewegung an das Transportband übergibt.

Die Erfindung wird im Folgenden anhand eines Ausführungsbeispiels weiter erläutert. Dabei wird auch auf die Zeichnung Bezug genommen, in deren
- FIG 1: eine teilweise geschnittene Ansicht einer Vorrichtung zum Bearbeiten von Teiglingen mit berührungslos arbeitenden Mitteln zum Herauslösen eines portionierten Teiglings aus einer Ausgebeeinrichtung,
- FIG 2: eine Detailansicht der berührungslos arbeitenden Mittel aus der FIG 1 mit einer Druckluftdüse und mit einer Öldüse, und
- FIG 3: eine Detailansicht einer Einrichtung zum Benetzen eines portionierten Teiglings und/oder einer Wandung einer Ausgebeeinrichtung mit Öl
jeweils schematisch dargestellt ist.

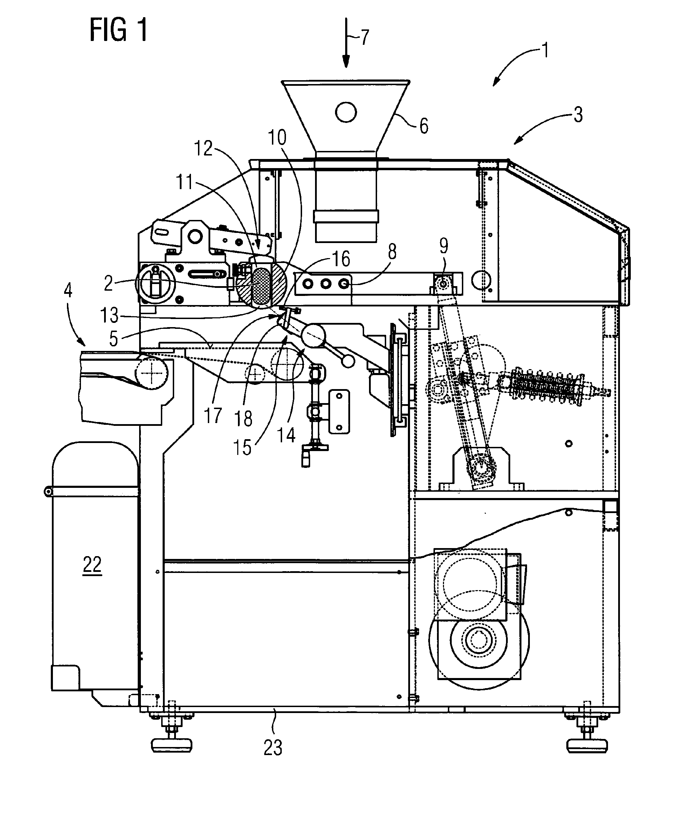

Die in der FIG 1 gezeigte Vorrichtung 1 zum Bearbeiten von Teiglingen 2 umfasst einerseits eine Einrichtung 3 zum Portionieren eines Teiglings 2. Andererseits umfasst die Bearbeitungsvorrichtung 1 eine Transporteinrichtung 4 mit einem umlaufenden Transportband (oder: Übergabeband) 5, mittels welchem portionierte Teiglinge 2 zur weiteren Verwendung weiter transportiert werden können, insbesondere zu einer nicht dargestellten Wirkvorrichtung zum Wirken der Teiglinge, in einer horizontalen und/oder fallfreien Transportbewegung. An dieser Stelle sei angemerkt, dass vorliegend die Begriffe Teiglinge 2 und portionierte Teiglinge 2 synonym verwendet werden.

Die Portioniereinrichtung 3 weist einen Teigmasseneinfülltrichter 6 auf, über welchem die Bearbeitungsvorrichtung 1 mit einer zusammenhängenden Teigmasse 7 beschickt werden kann. Unterhalb des Teigmasseneinfülltrichters 6 befindet sich ein Teigteilzylinder 8 mit einem Teigteilzylinderkolben 9, wobei der Teigteilzylinder 8 mit einer Teigteilwelle 10 insbesondere räumlich wirkverbunden sein kann.

Die Teigteilwelle 10 hat eine Teigteilkammer 11 und bildet mit dieser eine Ausgebeeinrichtung 12 der Portioniereinrichtung 3. Befindet sich die Teigteilkammer 11 in einer vertikalen Lage, kann mittels des Teigteilzylinderkolben 9 Teigmasse 7 in die Teigteilkammer 11 der Teigteilwelle 10 eingebracht werden. Durch Drehen der Teigteilwelle 10 um ihre Längsachse kann der Teigling 2 im Wesentlichen portioniert werden.

Ist die Teigteilwelle 10 derart gedreht, dass die Teigteilkammer 11 im Wesentlichen vertikal ausgerichtet ist (siehe Figur 1), wobei auch eine Ausgebeöffnung 13 der Ausgebeeinrichtung 12 nach unten hin ausgerichtet ist, kann der in Teigteilkammer 11 befindliche portionierte Teigling 2 allein auf Grund der Schwerkraft aus der Teigteilkammer 11 heraus fallen.

Um ein solches Herausfallen des portionierten Teiglings 2, insbesondere ein Lösen des portionierten Teiglings 2 von Wandungen der Teigteilkammer 11, zu unterstützen und gegebenenfalls zu beschleunigen, verfügt die Bearbeitungsvorrichtung 1 über berührungslos arbeitende Mittel 14 zum Lösen des portionierten Teiglings 2 von einem Bauteil und/oder von einer Bauteilgruppe der Bearbeitungsvorrichtung 1, wobei speziell in diesem Ausführungsbeispiel berührungslos arbeitende Mittel 15 zum Herauslösen des portionierten Teiglings 2 aus der Ausgebeeinrichtung 12 unterhalb dieser Ausgebeeinrichtung 12 angeordnet sind. Genau genommen sind die berührungslos arbeitenden Mittel 15 zum Herauslösen hierbei unterhalb und neben der Ausgebeöffnung 13 der Ausgebeeinrichtung 12 platziert.

Vorteilhafter Weise kann mittels der berührungslos arbeitenden Mittel 15 zum Herauslösen ein Lösen des portionierten Teiglings 2 aus der Teigteilkammer 11 erleichtert und auch forciert werden, wodurch ein Transport des portionierten Teiglings 2 insgesamt zuverlässiger erfolgen kann.

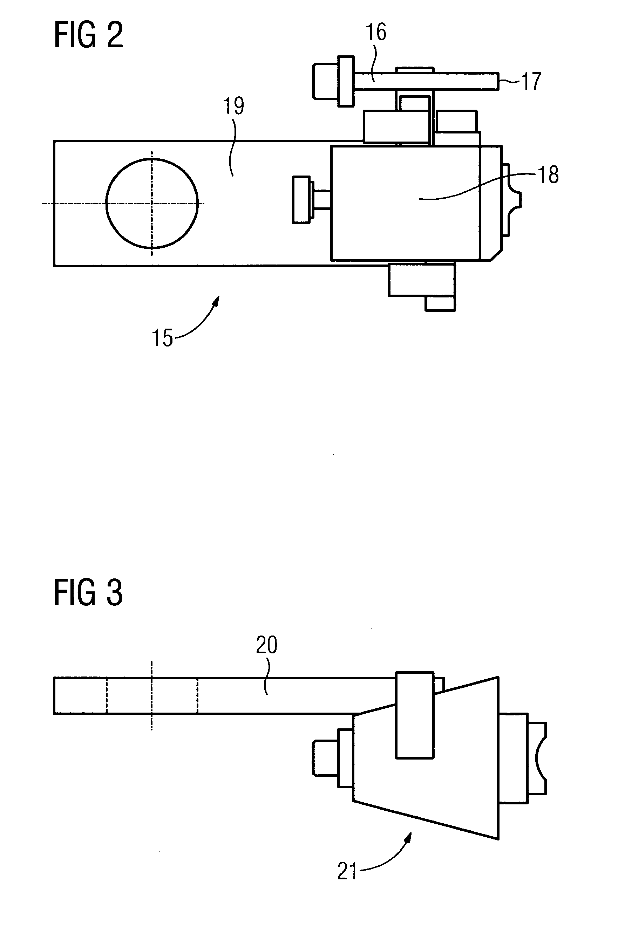

Zum berührungslosen Herauslösen verfügen die berührungslos arbeitenden Mittel 15 über wenigstens eine Druckluftdüse 16 (siehe insbesondere auch FIG 2). Insofern kann der portionierte Teigling 2 mittels Druckluftunterstützung berührungslos aus der Teigteilkammer 11 vorteilhaft herausgelöst werden.

Die Druckluftdüse 16 zeigt hierbei mit ihrer Düsenöffnung 17 (siehe nur Figur 2) auf die Ausgebeöffnung 13 der Ausgebeeinrichtung 12, so dass Druckluft in die Teigteilkammer 11 eingeblasen werden kann, wie aus der Darstellung nach der Figur 1 gut ersichtlich ist.

Neben der Druckluftdüse 16 verfügen die berührungslos arbeitenden Mittel 15 weiter noch über wenigstens eine Flüssigkeitsdüse 18, mittels welcher der portionierte Teigling 2, insbesondere vor einem Herauslösen aus der Teigteilkammer 11, vorzugsweise mit Öl benetzt werden kann, wodurch die Gefahr verringert wird, dass der herausgefallene Teigling 2 nach einem Aufprall auf das umlaufende Transportband 5 nachteilig fest an diesem umlaufenden Transportband 5 anhaften bleibt. Somit kann der Transport des portionierten Teiglings 2 weiter noch zuverlässiger gestaltet werden.

Sowohl die Druckluftdüse 16 als auch die Flüssigkeitsdüse 18 können beweglich an einer Halterung 19 der berührungslos arbeitenden Mittel 15 zum Herauslösen befestigt sein, so dass die Druckluftdüse 16 und die Flüssigkeitsdüse 18 gut und individuell auf die Ausgebeöffnung 13 ausgerichtet werden können.

An der in der Figur 3 gezeigten weiteren Halterung 20 ist eine Einrichtung 21 zum Benetzen des portionierten Teiglings 2 und/oder einer Wandung der Ausgebeeinrichtung 12 mit Öl befestigt, wobei die Benetzungseinrichtung 21 auch eine Komponente insbesondere berührungslos arbeitender Mittel 14 zum Lösen des portionierten Teiglings 2 von einem Bauteil und/oder von einer Bauteilgruppe der Bearbeitungsvorrichtung 1 sein können.

Damit an der Bearbeitungsvorrichtung 1 stets ausreichend Druckluft zum Speisen der Druckluftdüse 16 zur Verfügung steht, umfasst die Bearbeitungsvorrichtung 1 noch einen Druckluftbehälter 22, welcher an einem Gehäuse 23 der Bearbeitungsvorrichtung 1 befestigt ist. Auch kann ein entsprechender Flüssigkeitsbehälter (hier nicht gezeigt) zum Bevorraten von Öl oder dergleichen an der Bearbeitungsvorrichtung 1 vorgesehen sein.

### Bezugszeichenliste

- 1: Vorrichtung
- 2: Teiglinge, insbesondere portionierte Teiglinge
- 3: Einrichtung zum Portionieren eines Teiglings
- 4: Transporteinrichtung
- 5: umlaufendes Transportband
- 6: Teigmasseneinfülltrichter
- 7: Teigmasse
- 8: Teigteilzylinder
- 9: Teigteilzylinderkolben
- 10: Teigteilwelle
- 11: Teigteilkammer
- 12: Ausgebeeinrichtung
- 13: Ausgebeöffnung
- 14: berührungslos arbeitende Mittel zum Lösen eines portionierten Teiglings
- 15: berührungslos arbeitende Mittel zum Herauslösen des portionierten Teiglings
- 16: Druckluftdüse
- 17: Düsenöffnung
- 18: Flüssigkeitsdüse
- 19: Halterung
- 20: weitere Halterung
- 21: Einrichtung zum Benetzen
- 22: Druckluftbehälter
- 23: Gehäuse

## Patentansprüche

1. Vorrichtung (1) zum Bearbeiten von Teiglingen (2) umfassend eine Einrichtung (3) zum Portionieren eines Teiglings (2) mit einer Ausgebeeinrichtung (12) zum Ausgeben eines portionierten Teiglings (2) und umfassend eine Einrichtung (4) zum Transportieren und/oder zum Weiterverarbeiten des aus der Ausgebeeinrichtung (12) ausgegebenen portionierten Teiglings (2),
**gekennzeichnet durch**
berührungslos arbeitende Mittel (14) zum Lösen des portionierten Teiglings (2) von einem Bauteil und/oder von einer Bauteilgruppe der Bearbeitungsvorrichtung (1).

2. Vorrichtung (1) nach Anspruch 1,
**gekennzeichnet durch**
berührungslos arbeitende Mittel (15) zum Herauslösen des portionierten Teiglings (2) aus der Ausgebeeinrichtung (12).

3. Vorrichtung (1) nach Anspruch 1 oder 2,
**dadurch gekennzeichnet, dass**
die berührungslos arbeitenden Mittel (14, 15) eine Druckluftdüse (16) umfassen.

4. Vorrichtung (1) nach einem der Ansprüche 1 bis 3,
**dadurch gekennzeichnet, dass**
die berührungslos arbeitenden Mittel (14, 15) eine Flüssigkeitsdüse (18) umfassen.

5. Vorrichtung (1) nach einem der Ansprüche 1 bis 4,
**dadurch gekennzeichnet, dass**
die berührungslos arbeitenden Mittel (14, 15) eine Einrichtung (21) zum Benetzen des portionierten Teiglings (2) und/oder einer Wandung der Ausgebeeinrichtung (13) mit Öl umfassen.

6. Vorrichtung (1) nach einem der Ansprüche 1 bis 5,
**dadurch gekennzeichnet, dass**
die berührungslos arbeitenden Mittel (14, 15) unterhalb der Ausgebeeinrichtung (12) angeordnet sind und/oder vor oder neben einer Ausgebeöffnung (13) der Ausgebeeinrichtung (12) angeordnet sind.

7. Vorrichtung (1) nach einem der Ansprüche 1 bis 6,
**dadurch gekennzeichnet, dass**
die Ausgebeeinrichtung (12) eine Teigteilwelle (10) mit einer Teigteilkammer (11) aufweist.

8. Vorrichtung nach einem der vorhergehenden Ansprüche mit einer Wirkvorrichtung zum Wirken der portionierten Teiglinge, bei der der Transport der Teiglinge von der Ausgebeeinrichtung (12) oder der Portioniereinrichtung (3) zu der Wirkvorrichtung im Wesentlichen horizontal und/oder ohne eine Fallbewegung erfolgt, wobei insbesondere der Wirkvorrichtung eine Übergabeeinrichtung, insbesondere ein Übergabeband (105), vorgeschaltet ist, die die von der Portioniereinrichtung oder Ausgebeeinrichtung kommenden Teiglinge im Wesentlichen horizontal und/oder ohne eine Fallbewegung an die Wirkvorrichtung, insbesondere ein Transportband (20) der Wirkvorrichtung übergibt.

9. Verfahren zum Bearbeiten von Teiglingen (2), bei welchem jeweils ein Teigling (2) von einer Teigmasse (7) getrennt und hierbei portioniert werden kann, wobei der portionierte Teigling (2) aus einer Teigteilkammer (11) einer Portioniereinrichtung (3) heraus zum Weiterverarbeiten bereitgestellt wird,
**dadurch gekennzeichnet, dass**
der portionierte Teigling (2) berührungslos aus der Teigteilkammer (11) herausgelöst wird.

10. Verfahren nach Anspruch 9,
**dadurch gekennzeichnet, dass**
der portionierte Teigling (2) mittels Druckluftunterstützung berührungslos aus der Teigteilkammer (11) herausgelöst wird.

11. Verfahren nach Anspruch 9 oder 10,
**dadurch gekennzeichnet, dass**
Druckluft in die Teigteilkammer (11) eingeblasen wird.

12. Verfahren nach einem der Ansprüche 9 bis 11,
**dadurch gekennzeichnet, dass**
der portionierte Teigling (2) vor, während und/oder nach einem Herauslösen aus der Teigteilkammer (11) mit einer Flüssigkeit, vorzugsweise mit Öl, benetzt wird.

13. Verfahren nach einem der Ansprüche 9 bis 12,
**dadurch gekennzeichnet, dass**
die Teigteilkammer (11) nach einem Herauslösen des portionierten Teiglings (2) aus der Teigteilkammer (11) zumindest teilweise mit einer Flüssigkeit, vorzugsweise mit Öl, benetzt wird.

14. Verfahren nach einem der Ansprüche 9 bis 13,
**dadurch gekennzeichnet, dass**
abwechselnd Öl und Druckluft insbesondere auf den portionierten Teigling (2) in der Teigteilkammer (11) gedüst werden.

15. Vorrichtung nach einem der Ansprüche 9 bis 14, bei dem die portionierten Teiglinge von der Ausgebeeinrichtung (12) oder der Portioniereinrichtung (3) zu einer Wirkvorrichtung zum Wirken der portionierten Teiglinge transportiert werden, wobei der Transport der Teiglinge zur Wirkvorrichtung im Wesentlichen horizontal und/oder ohne eine Fallbewegung erfolgt, wobei insbesondere der Wirkvorrichtung eine Übergabeeinrichtung, insbesondere ein Übergabeband (105), vorgeschaltet ist, die die von der Portioniereinrichtung oder Ausgebeeinrichtung kommenden Teiglinge im Wesentlichen horizontal und/oder ohne eine Fallbewegung an die Wirkvorrichtung, insbesondere ein Transportband (20) der Wirkvorrichtung übergibt.
